# EUROPEAN PATENT APPLICATION

(11) **EP 4 741 648 A1**
(43) Date of publication of application: **13.05.2026**
(21) Application number: 25215055.2
(22) Date of filing: 11.11.2025
(51) Int. Cl.: F02C 7/32, F01D 11/24

(54) **ENGINE ACCESSORY MOUNTING ASSEMBLY**

(30) Priority: 11.11.2024 US 202418942974
(71) Applicant: Pratt & Whitney Canada Corp., (01BE5) Longueuil, QC J4G 1A1 (CA)
(72) Inventor: FISH, Jason, (01BE5) Longueuil, J4G 1A1 (CA)
(74) Representative: Dehns

(57) **Abstract**

A mounting arrangement includes a casing (17) of an aircraft engine (10) extending around an axis, an accessory (22), and a bracket (40) for mounting the accessory to the casing. The bracket (40) includes a first bracket segment (44) coupled to the casing at a first mounting point and a second bracket segment (48) coupled to the accessory at a second mounting point. The mounting arrangement further includes one or more shoulder bolts (56) fastening one or more of the first bracket segment (44) to the casing at the first mounting point and the second bracket segment (48) to the accessory at the second mounting point, and one or more wave springs (54) disposed about a shaft of the one or more shoulder bolts (56) and engaging one or more of the first bracket segment (44) at the first mounting point and the second bracket segment (48) at the second mounting point.

## Description

### TECHNICAL FIELD

The invention relates generally to aircraft engines and, more particularly, to mounting arrangements in aircraft engines.

### BACKGROUND

Aircraft engines may include various accessories, such as accessory gearboxes, fluid tanks and cooling manifolds. These accessories are mounted to the engine casing, for instance, via mounting arrangements comprising one or more brackets. These brackets are subjected to various dynamic and thermal loads, which may cause premature wear. Improvements are desired.

### SUMMARY

In one aspect of the invention, there is provided a mounting arrangement, comprising: a casing of an aircraft engine extending around an axis; an accessory; a bracket for mounting the accessory to the casing, the bracket comprising a first bracket segment coupled to the casing at a first mounting point (e.g., defined by the casing) and a second bracket segment coupled to the accessory at a second mounting point (e.g., defined by the accessory); one or more bolts (e.g., shoulder bolts) fastening one or more of the first bracket segment to the casing at the first mounting point and the second bracket segment to the accessory at the second mounting point; and one or more wave springs disposed about a shaft of the one or more bolts and engaging one or more of the first bracket segment at the first mounting point and the second bracket segment at the second mounting point.

The mounting arrangement described above may include any of the following features, in any combinations.

In any of the aspects or embodiments described above or herein, one (e.g., a first) of the one or more bolts may fasten the first bracket segment to the casing at the first mounting point, and one (e.g., a first) of the one or more wave springs may be disposed between the first bracket segment and the casing.

In any of the aspects or embodiments described above or herein, another (e.g., a second) of the one or more wave springs may be disposed between a head of the first of the one or more bolts and the first bracket segment at the first mounting point.

In any of the aspects or embodiments described above or herein, one (e.g., a first or second) of the one or more bolts may fasten the second bracket segment to the accessory at the second mounting point, and one (e.g., a first, second or third) of the one or more wave springs may be disposed between the second bracket segment and the accessory.

In any of the aspects or embodiments described above or herein, another (e.g., a second, third or fourth) of the one or more wave springs may be disposed between a head of the one (e.g., the first or second) of the one or more bolts and the accessory at the second mounting point.

In any of the aspects or embodiments described above or herein, another (e.g., a second) of the one or more bolts may fasten the second bracket segment to the accessory at the second mounting point, and another (e.g., a second or third) of the one or more wave springs may be disposed between the second bracket segment and the accessory.

In any of the aspects or embodiments described above or herein, a third of the one or more wave springs may be disposed between a head of the first of the one or more bolts and the first bracket segment at the first mounting point, and a fourth of the one or more wave springs may be disposed between a head of the second of the one or more bolts and the accessory at the second mounting point.

In any of the aspects or embodiments described above or herein, the mounting arrangement may have characteristics including: a stiffness of the one or more wave springs, a length of the one or more wave springs, a number of the one or more wave springs, and a degree of tightening of the one or more bolts, the characteristics of the mounting arrangement selected to dampen vibrations from the casing to the accessory.

In any of the aspects or embodiments described above or herein, the one or more wave springs may be compressible along a bolt axis extending through the one or more bolts in response to vibrations transmitted to the bracket from one or more of the casing and the accessory.

In any of the aspects or embodiments described above or herein, the accessory may comprise a cooling manifold.

In any of the aspects or embodiments described above or herein, the casing may comprise a turbine casing.

In another aspect of the invention, there is provided an aircraft engine, comprising: a turbine section having a turbine core housed within a turbine casing; a cooling system for the turbine section, the cooling system including a cooling manifold disposed around the turbine casing and a cooling conduit adapted to provide a cooling flow to the cooling manifold; and brackets disposed about a circumference of the cooling manifold and coupling the cooling manifold to the turbine casing, at least one of the brackets having a first coupling between a first bracket segment and the turbine casing at a first mounting point and a second coupling between a second bracket segment and the cooling manifold at a second mounting point, at least one of the first coupling and the second coupling including a bolt (e.g., a shoulder bolt) with one or more wave springs disposed about a shaft of the bolt.

In another aspect of the invention, there is provided an aircraft engine, comprising: a turbine section having a turbine core housed within a turbine casing; an accessory for the turbine section (e.g., a cooling system for the turbine section, the cooling system including a cooling manifold disposed around the turbine casing and a cooling conduit adapted to provide a cooling flow to the cooling manifold); and brackets disposed about a circumference of the accessory (e.g., brackets disposed about a circumference of the cooling manifold and coupling the cooling manifold to the turbine casing), at least one of the brackets having a first coupling between a first bracket segment and the turbine casing at a first mounting point and a second coupling between a second bracket segment and the cooling manifold at a second mounting point, at least one of the first coupling and the second coupling including a bolt (e.g., a shoulder bolt) with one or more wave springs disposed about a shaft of the bolt.

The aircraft engine described above may include any of the following features, in any combinations.

In any of the aspects or embodiments described above or herein, a or the bolt may fasten the first bracket segment to the turbine casing at the first mounting point, and one (e.g., a first) of the one or more wave springs may be disposed between the first bracket segment and the casing.

In any of the aspects or embodiments described above or herein, another (e.g. a second) of the one or more wave springs may be disposed between a head of the bolt and the first bracket segment at the first mounting point.

In any of the aspects or embodiments described above or herein, a or the bolt may fasten the second bracket segment to the cooling manifold at the second mounting point, and one (e.g., a first or second) of the one or more wave springs may be disposed between the second bracket segment and the cooling manifold.

In any of the aspects or embodiments described above or herein, another (e.g., a second) of the one or more wave springs may be disposed between a head of the bolt and the cooling manifold at the second mounting point.

In any of the aspects or embodiments described above or herein, an additional bolt (e.g., an additional shoulder bolt) may fasten the second bracket segment to the cooling manifold at the second mounting point, and another (e.g., a second) of the one or more wave springs may be disposed between the second bracket segment and the cooling manifold.

In any of the aspects or embodiments described above or herein, a third of the one or more wave springs may be disposed between a head of the bolt and the first bracket segment at the first mounting point, and a fourth of the one or more wave springs may be disposed between a head of the additional bolt and the cooling manifold at the second mounting point.

In any of the aspects or embodiments described above or herein, at least one of the first coupling and the second coupling may have characteristics including: a stiffness of the one or more wave springs, a length of the one or more wave springs, a number of the one or more wave springs, and a degree of tightening of the one or more bolts, the characteristics selected to dampen vibrations from the turbine casing to the cooling manifold.

In any of the aspects or embodiments described above or herein, the one or more wave springs may be compressible along a bolt axis extending through the bolt in response to vibrations transmitted to the bracket from one or more of the turbine casing and the cooling manifold.

In a further aspect of the invention, there is provided a method for absorbing vibrations between an accessory and a casing of an aircraft engine, comprising: coupling the accessory to the casing via brackets (e.g., one or more brackets in accordance with any of the aspects or embodiments described above or herein), at least one of the brackets coupling the accessory to the casing at a first mounting point between a first bracket segment and the casing at and at a second mounting point between a second bracket segment and the accessory; and fastening the at least one of the brackets to at least one of the casing and the accessory with a (e.g., a shoulder bolt) with one or more wave springs disposed about a shaft of the bolt.

In any of the aspects or embodiments described above or herein, coupling the accessory to the casing via the brackets may include fastening the bracket to the casing with a first said bolt and fastening the bracket to the accessory with a second said bolt (e.g., a second shoulder bolt), with wave springs disposed about a shaft of the first said bolt and the second said bolt.

### BRIEF DESCRIPTION OF THE DRAWINGS

Reference is now made to the accompanying figures in which:
FIG. 1 is a schematic cross sectional view of a gas turbine engine suitable for use as an aircraft engine;
FIG. 2 is a perspective view of an accessory mount for the engine of FIG. 1;
FIG. 3 is an enhanced cross sectional view of the accessory mount of FIG. 2, taken along line III-III;
FIG. 4 is an enhanced cross sectional view of a bracket for the accessory mount of FIG. 2, according to an embodiment;
FIG. 5 is an enhanced cross sectional view of a bracket for the accessory mount of FIG. 2, according to another embodiment; and
FIG. 6 is an enhanced cross sectional view of a bracket for the accessory mount of FIG. 2, according to another embodiment.

### DETAILED DESCRIPTION

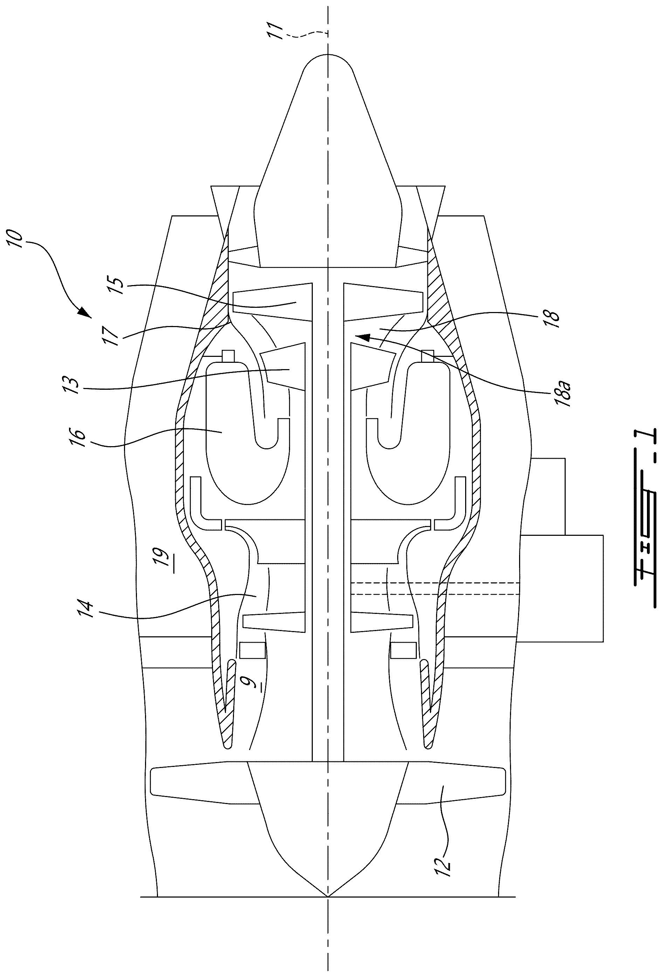

FIG. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The fan 12 propels the ambient air through an inner core 9 of the engine 10, and an outer bypass duct 19. The turbine section 18 can have a turbine or turbine core 18a which can have a high pressure turbine (HPT) 13 and a low pressure turbine (LPT) 15, both of which are housed or enclosed by a turbine casing or case 17 extending around a longitudinal center axis 11 of the gas turbine engine 10. While engine 10 is shown to be a turbofan gas turbine engine, the present disclosure is also directed to other engine types, such as turboprop and turboshaft engines, as well as hybrid electric engines.

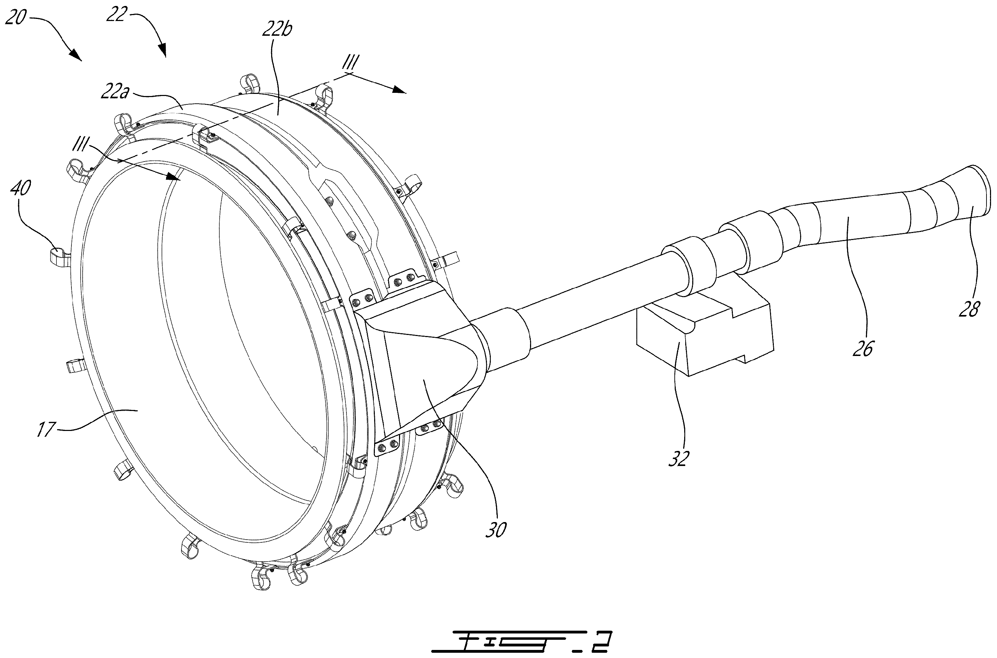

Referring to FIG. 2, an engine accessory adapted to be mounted to the engine case 17 is shown. According to the depicted example, the accessory is embodied as a cooling system 20 for cooling a part of the engine 10, such as the turbine casing or case 17. The proximity of the turbine case 17 to the working components of the turbine core 18a results in a significant heating of the turbine case 17. The cooling system 20 allows for the continuous regulation of the temperature of the turbine case 17, thus helping to maintain a control operational clearance between the turbine rotor blades of core 18a and the turbine case 17. In so doing, the cooling system 20 helps to maintain the optimum efficiency of the engine core 18a. According to some embodiments, the cooling system 20 may include the turbine case 17 and one or more cooling conduits 26, both of which will now be discussed in greater detail.

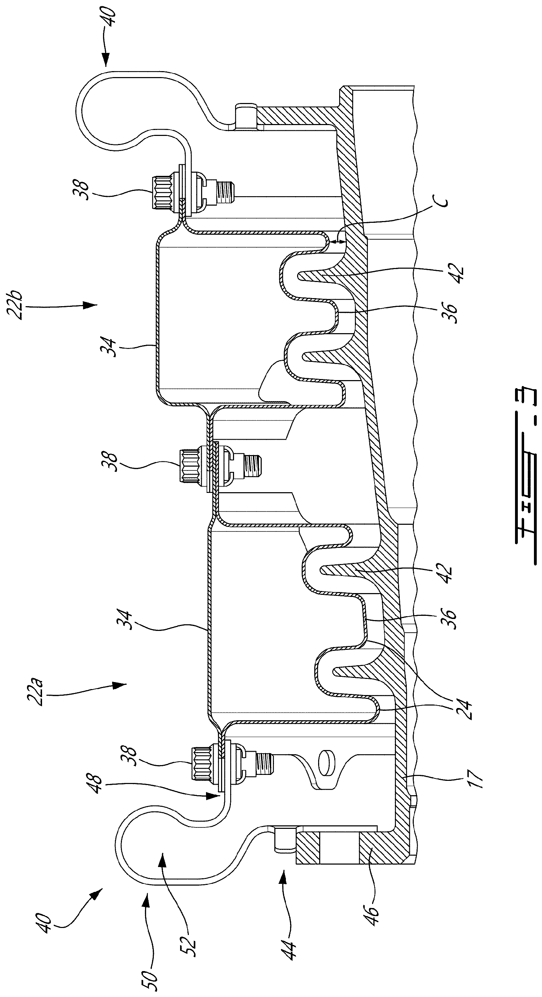

The turbine casing or case 17 extends circumferentially around the central axis and encloses some (or all) of the turbine core 18a and separates it from the bypass duct 19. Referring to FIG. 3, the turbine case 17 can have, on a radially outwardly facing surface thereof, a turbine case cooling manifold assembly 22 (or simply "cooling manifold assembly 22"), which is located radially inward from the bypass duct 19. The cooling manifold assembly 22 surrounds or envelops the case 17 and is adapted to distribute a cooling gas flow to the turbine case 17, thereby cooling the turbine case 17 and helping to maintain optimum clearance with the rotating components of the HPT 13 and LPT 15. One or more cooling manifold assemblies 22 can be used to cool the turbine case 17. For example, both the HPT 13 and the LPT 15 can each have their own cooling manifold assembly 22. In the shown example, the cooling manifold assembly 22 includes a first cooling manifold 22a and a second cooling manifold 22b, as will be described in further detail below.

In some embodiments, the cooling manifold assembly 22 has multiple apertures 24 (see FIG. 3) which are spaced apart through the cooling manifold assembly 22 about its circumference, thus surrounding the turbine case 17. The apertures 24 can distribute the cooling gas flow over the surface of the turbine case 17, thus providing a "showerhead" cooling flow to the turbine case 17. Other cooling flow distribution techniques are contemplated as well.

The cooling gas flow is supplied to the cooling manifold assembly 22 via the longitudinal cooling conduit 26. The cooling conduit 26 can be any pipe or duct which can convey the cooling gas flow from a cooling source, such as the bypass duct 19, to the cooling manifold assembly 22. The cooling conduit 26 can be a distinct component from the turbine case 17, or can extend through it. Indeed, in some embodiments, the cooling conduit 26 can be an elongated aperture extending through the turbine case 17. Although shown as substantially cylindrical, it will be appreciated that the cooling conduit 26 can take other shapes. The cooling conduit 26 has an inlet 28 which is in fluid flow communication with the bypass duct 19 such as to receive bypass air therefrom. Other sources of cooling flow may be contemplated. The cooling conduit 26 also has an outlet 30 which is in fluid flow communication with the cooling manifold assembly 22. In the shown embodiment, the flow of the cooling gas flow can be modulated by using suitable flow control devices, such as a valve 32.

Referring additionally to FIG. 3, a cross-sectional view of the cooling manifolds 22a, 22b mounted to the turbine case 17 is shown, according to an embodiment of the present disclosure. Each cooling manifold 22a, 22b includes an outer manifold body 34 and an inner manifold body 36 disposed radially inwardly of the outer manifold body 34. Each outer manifold body 34 is operatively connected to the inner manifold body 36 at various locations, illustratively via fasteners 38, as will be discussed below.

The cooling manifolds 22a, 22b are mounted to the turbine case 17 via brackets 40 with spring-like properties to allow the cooling manifolds 22a, 22b to expand under the high temperatures and to prevent high stresses from the turbine case 17 from reaching the manifold assembly 22. The brackets 40 are also adapted to govern the clearance C between the manifolds 22a, 22b and the turbine case 17. In the shown example, each cooling manifold 22a, 22b is connected to brackets 40 at a first axial end and to the other cooling manifold 22a, 22b at a second axial end, with circumferential arrays of brackets 40 extending about an outer circumference of each cooling manifold 22a, 22b (see FIG. 2). The brackets 40 are adapted to operatively couple the cooling manifolds 22a, 22b to the turbine case 17 and maintain the inner manifold bodies 36 at a radial distance (illustratively at a clearance C) from the turbine case 17 to allow the cooling flow to flow across the surface of the turbine case 17. **In** the shown case, the turbine case 17 includes circumferential ribs 42 extending radially outwardly therefrom, with the inner manifold bodies 36 maintaining the clearance C around the turbine case 17.

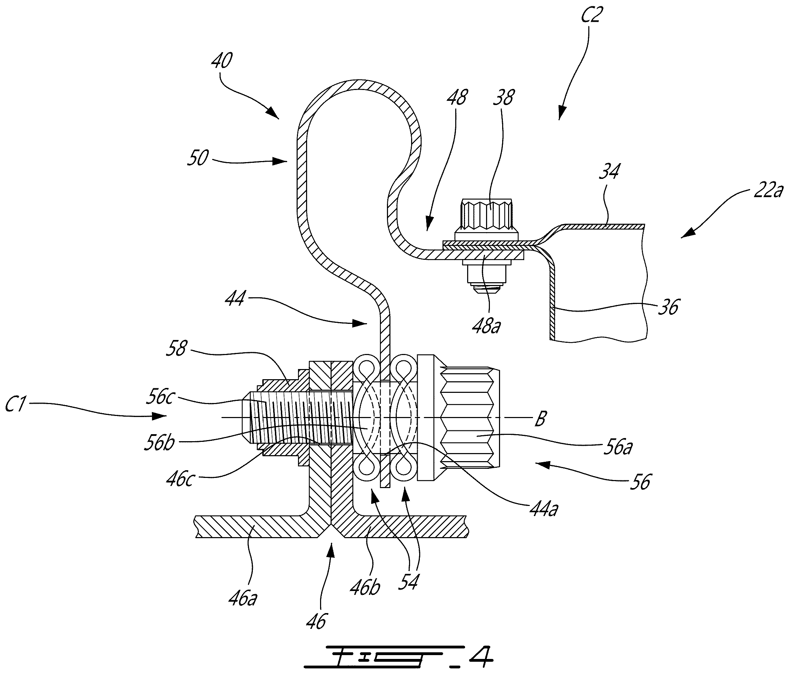

Referring additionally to FIG. 4, an exemplary bracket 40 is shown. The bracket 40 has a first end 44 couplable to the turbine case 17, illustratively a flange or support 46 protruding radially outwardly from the turbine case 17, at a first coupling C1. The bracket 40 has a second end 48 extending in a plane normal to that of the first end 44 and couplable to a respective one of the cooling manifolds 22a, 22b, illustratively via fastener 38 at a junction between the outer manifold 34 and inner manifold 36, at a second coupling C2. The bracket 40 further includes a curved portion 50 extending between the first end 44 and the second end 48, the curved portion 50 defining a partial loop at least partially enclosing an inner volume 52 of the bracket 40. The curved portion 50 includes first and second spaced apart by the inner volume 52 of the bracket 40. In the shown embodiment, the first and second ends 44, 48 include apertures 44a, 48a disposed therethrough (see FIG. 4) for attachment to the turbine case 17 and the manifolds 22a, 22b, respectively.

The brackets 40 connecting the cooling manifold assembly 22 to the turbine case 17 are provided with a sufficient degree of flexibility to avoid over-stressing and preserve the structural integrity of the cooling manifolds 22a, 22b to avoid breaking. Such flexibility is provided, for instance, by the legs of the curved portion 50 being movable relative to one another. However, the brackets 40 are subjected to various stresses under typical engine 10 operation, which over time may lead to cracks or fractures, for instance due to high cycle fatigue. Due to the high temperatures adjacent the case of the engine 10 (e.g., up to 750° F), the brackets 40 are typically made from metal. While increasing the thickness of the brackets 40 would likely alleviate the vibration-related concerns, such an increase would decrease the flexibility of the brackets 40, potentially leading to damage to the manifolds 22a, 22b. In addition, due to the high temperatures adjacent the turbine case 17, the adjacent components are made of materials that can withstand these high temperatures, such as metal.

According to one aspect of the present disclosure, there is provided a mounting arrangement between the turbine case 17 and the cooling manifold 22a, 22b. The mounting arrangement includes one or more wave springs 54 to provide a dampening effect to the bracket 40 connecting the turbine case 17 to the cooling manifold 22a, 22b, thereby tuning the bracket 40 to avoid undesirable vibration frequencies. Indeed, the one or more wave springs 54 are used at the couplings C1, C2 between a given bracket 40 and the turbine case 17 and/or the cooling manifold 22a, 22b to dampen or absorb vibrations between the turbine case 17 and cooling manifolds 22a, 22b. In various embodiments, the shoulder bolts 56 are tightened to a specific degree (i.e., setting a predetermined gap between the shoulder bolt 56 and a respective mounting surface) to set a desired compression level of the one or more wave springs 54 and maintaining a preload of the given coupling C1, C2.

Various arrangements for the one or more wave springs 54 are disclosed, as will be discussed in further detail below. The number of wave springs 54 may vary. In some cases, each bracket 40 along the outer circumferences of the manifolds 22a, 22b is provided with one or more wave springs 54. In other cases, only brackets 40 of one of the manifolds 22a, 22b is provided with one or more wave springs 54. Other configurations may be contemplated, for instance one or more wave springs 54 that alternate between sides of the manifold assembly 22.

Referring now to FIG. 4, an embodiment of a mounting arrangement between the turbine case 17 and the cooling manifold 22a, 22b is shown. **In** this embodiment, wave springs 54 are provided at a first mounting point (i.e., at first coupling C1) between the bracket 40 (in particular, the first bracket end 44) and the turbine case 17, in particular via a support or flange 46 of the turbine case 17. The flange 46 is illustratively formed by a pair of abutting flange members 46a, 46b arranged to form an aperture 46c therethrough for mounting of the bracket 40. A shoulder bolt 56 is provided to couple the first bracket end 44 to the flange 46. The depicted shoulder bolt 56 includes a head 56a, a shoulder 56b and a threaded portion 56c. A bolt axis B extends through a length of the shoulder bolt 56. To fasten the first bracket end 44 to the flange 46, the shoulder bolt 56 is inserted through the apertures 44a, 46c and fastened via a nut 58 secured to the threaded portion 56c on the opposite side of aperture 46c. The shoulder 56b is adapted to assist in clamping and allow the damping force to be received at the bracket 40 alone.

Illustratively, two wave springs 54 are provided, each disposed about the shoulder bolt 56: a first wave spring 54 disposed or sandwiched between the bolt head 56a and the first bracket end 44, and a second wave spring 54 disposed or sandwiched between the first bracket end 44 and the flange 46. In other cases, a single wave spring 54 is provided at this mounting location, i.e., either between the bolt head 56a and the first bracket end 44 or between the first bracket end 44 and the flange 46. The depicted wave springs 54 are flat wire compression springs whose stiffness, thickness and length may vary. As the shoulder bolt 56 secures the first bracket end 44 to the flange 46, the wave springs 54 are compressed along the bolt axis **B,** the degree to which may vary. The wave springs 54 are thus adapted to provide flexibility to the mounting arrangement to dampen excessive dynamic excitation, as well as to reduce assembly preloading, while maintaining the required structural integrity of the mounting arrangement to effectively support the manifold assembly 22. In the embodiment shown in FIG. 4, the second coupling C2 at the second bracket end 48 does not include wave springs 54. As such, fastener 38 is not required to be a shoulder bolt 56 and is merely adapted to connect the second bracket end 48 to the flange formed by the outer manifold body 34 and inner manifold body 36. Other wave spring arrangements are contemplated, as discussed below.

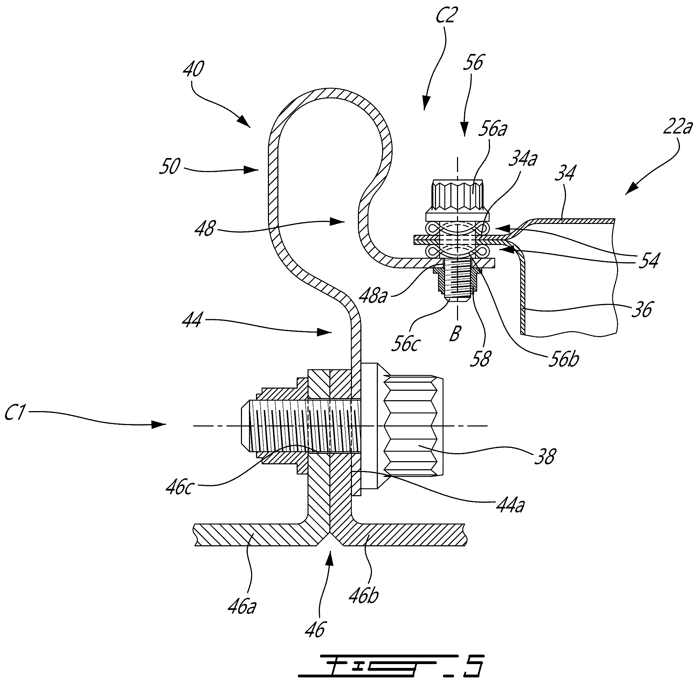

Referring now to FIG. 5, another embodiment of a mounting arrangement between the turbine case 17 and the cooling manifold 22a, 22b is shown. **In** this embodiment, wave springs 54 are provided at a second mounting point (i.e., at second coupling C2) between the bracket 40 (in particular, the second bracket end 48) and the cooling manifold 22a (and/or to cooling manifold 22b), in particular via a flange formed by the intersection of the outer manifold body 34 and inner manifold body 36. An aperture 34a is formed at the abutment of the outer manifold body 34 and inner manifold body 36, the aperture 34a adapted for mounting the second bracket end 48 via a shoulder bolt 56. The depicted shoulder bolt 56 includes a head 56a, a shoulder 56b and a threaded portion 56c. A bolt axis B extends through a length of the shoulder bolt 56. To fasten the second bracket end 48 to the cooling manifold 22a, the shoulder bolt 56 is inserted through the apertures 34a, 48a and fastened via a nut 58 secured to the threaded portion 56c on the opposite side of aperture 48a. The shoulder 56b is adapted to assist in clamping and allow the damping force to be received at the bracket 40 alone.

Illustratively, two wave springs 54 are provided, each disposed about the shoulder bolt 56: a first wave spring 54 disposed or sandwiched between the bolt head 56a and the flange of the cooling manifold 22a, and a second wave spring 54 disposed or sandwiched between the flange of the cooling manifold 22a and the second bracket end 48. In other cases, a single wave spring 54 is provided at this mounting location, i.e., either between bolt head 56a and the flange of the cooling manifold 22a or between the flange of the cooling manifold 22a and the second bracket end 48. The depicted wave springs 54 are flat wire compression springs whose stiffness, thickness and length may vary. As the shoulder bolt 56 secures the second bracket end 48 to the cooling manifold 22a, the wave springs 54 are compressed along the bolt axis **B,** the degree to which may vary. The wave springs 54 are thus adapted to provide flexibility to the mounting arrangement to dampen excessive dynamic excitation, as well as to reduce assembly preloading, while maintaining the required structural integrity of the mounting arrangement to effectively support the manifold assembly 22. In the embodiment shown in FIG. 5, the first coupling C1 at the first bracket end 44 does not include wave springs 54. As such, fastener 38 is not required to be a shoulder bolt 56 and is merely adapted to connect the first bracket end 44 to the 46 of the turbine case 17. Other mounting configurations may be contemplated. For instance, while FIG. 5 shows the second bracket end 48 positioned below the flange of the cooling manifold 22a, the opposite arrangement may be contemplated (i.e., the second bracket end 48 disposed above the flange of the cooling manifold 22a).

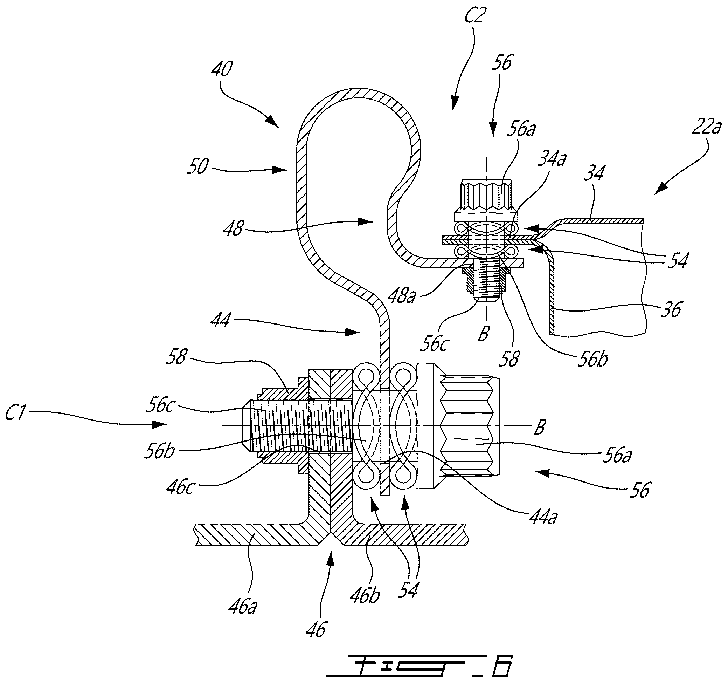

Referring now to FIG. 6, another embodiment of a mounting arrangement between the turbine case 17 and the cooling manifold 22a, 22b is shown. **In** this embodiment, wave springs 54 are provided at both the first mounting point (i.e., at first coupling C1) between the first bracket end 44) and the turbine case 17, in particular via a support or flange 46 of the turbine case 17, as well as at the second mounting point (i.e., at second coupling C2) between the bracket 40 (in particular, the second bracket end 48) and the cooling manifold 22a (and/or to cooling manifold 22b), in particular via a flange formed by the intersection of the outer manifold body 34 and inner manifold body 36. bracket 40. Shoulder bolts 56 are provided at the first coupling C1 to couple the first bracket end 44 to the flange 46 and at the second coupling C2 to couple the second bracket end 48 to the flange of the cooling manifold 22a. The depicted shoulder bolts 56 each include a head 56a, a shoulder 56b and a threaded portion 56c. A bolt axis B extends through a length of each shoulder bolt 56. To fasten the first bracket end 44 to the flange 46, the shoulder bolt 56 is inserted through the apertures 44a, 46c and fastened via a nut 58 secured to the threaded portion 56c on the opposite side of aperture 46c. Similarly, to fasten the second bracket end 48 to the cooling manifold 22a, the shoulder bolt 56 is inserted through the apertures 34a, 48a and fastened via a nut 58 secured to the threaded portion 56c on the opposite side of aperture 48a. The shoulders 56b are adapted to assist in clamping and allow the damping force to be received at the bracket 40 alone.

Illustratively, two wave springs 54 are provided at each coupling C1, C2, each disposed about one of the shoulder bolts 56. At the first coupling C1, a first wave spring 54 is disposed or sandwiched between the bolt head 56a and the first bracket end 44, and a second wave spring 54 is disposed or sandwiched between the first bracket end 44 and the flange 46. At the second coupling C2, a first wave spring 54 is disposed or sandwiched between the bolt head 56a and the flange of the cooling manifold 22a, and a second wave spring 54 is disposed or sandwiched between the flange of the cooling manifold 22a and the second bracket end 48.

In other cases, a single wave spring 54 is provided at each mounting location, i.e., either between the bolt head 56a and the first bracket end 44 or between the first bracket end 44 and the flange 46 at the first coupling C1, and either between bolt head 56a and the flange of the cooling manifold 22a or between the flange of the cooling manifold 22a and the second bracket end 48 at the second coupling C2. The depicted wave springs 54 are flat wire compression springs whose stiffness, thickness and length may vary. As the shoulder bolt 56 secures a given bracket end 44, 48 to a respective flange, the wave springs 54 are compressed along the bolt axis B, the degree to which may vary. The wave springs 54 are thus adapted to provide flexibility to the mounting arrangement to dampen excessive dynamic excitation, as well as to reduce assembly preloading, while maintaining the required structural integrity of the mounting arrangement to effectively support the manifold assembly 22.

Various characteristics of the above-described mounting arrangements can be selected to selectively dampen vibrations from the turbine case 17 to the manifold assembly 22. For instance, a stiffness of the wave spring(s) 54, a length of the wave spring(s) 54, a number of the wave spring(s) 54, and a degree of tightening of the shoulder bolt(s) 56 can be selected to modulate the level of dampening provided. Other such characteristics may further be contemplated.

According to another aspect of the present invention, there is provided a method for absorbing or hindering vibrations between an accessory (e.g., cooling manifold assembly 22) and a casing (e.g., turbine case 17) of an aircraft engine 10. The accessory is coupled to the casing via brackets 40, at least one of the brackets 40 coupling the accessory to the casing at a first mounting point between a first bracket segment 44 and the casing at and at a second mounting point between a second bracket segment 48 and the accessory. The at least one of the brackets 40 is fastened to at least one of the casing and the accessory with a shoulder bolt 56 with one or more wave springs 54 disposed about a shaft of the shoulder bolt 56.

According to some aspects, the present invention provides for a mounting arrangement for a cooling manifold assembly 22 and a turbine case 17. The mounting arrangement is adapted for dampening of a connection between the cooling manifold assembly 22 to the turbine case 17 via one or more brackets 40 coupling the cooling manifold assembly 22 to the turbine case, with one or more wave springs 54 providing the dampening effect at one or both of the couplings. The mounting arrangement is adapted to provide sufficient flexibility to the cooling manifold assembly 22 while dampening vibrations via the one or more wave springs 54, thereby striking a balance between dynamics and stresses.

The above-disclosed wave springs 54 are described as being provided for use with brackets 40 coupling a cooling manifold assembly 22 to a turbine case 17. However, it is understood that the brackets 40 with wave springs 54 are implementable in other mounting arrangements, for instance to mount other engine accessories such as air, fuel or oil tubes, to the casing of the engine 10. Other locations for the above-disclosed brackets 40 with wave springs 54 may be contemplated where an engine bracket requires dampening without increased stiffness.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present invention have been disclosed, it will be apparent to those of ordinary skill in the art that many more embodiments and implementations are possible within the scope of the present invention. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. For instance, one or more of the above-referenced wave springs can be replaced with an elastomeric spring. Yet further modifications could be implemented by a person of ordinary skill in the art in view of the present disclosure, which modifications would be within the scope of the present technology.

## Claims

1. A mounting arrangement, comprising:
a casing (17) of an aircraft engine (10) extending around an axis (11);
an accessory (22);
a bracket (40) for mounting the accessory (22) to the casing (17), the bracket (40) comprising a first bracket segment (44) coupled to the casing (17) at a first mounting point and a second bracket segment (48) coupled to the accessory (22) at a second mounting point;
one or more shoulder bolts (56) fastening one or more of the first bracket segment (44) to the casing (17) at the first mounting point and the second bracket segment (48) to the accessory (22) at the second mounting point; and
one or more wave springs (54) disposed about a shaft of the one or more shoulder bolts (56) and engaging one or more of the first bracket segment (44) at the first mounting point and the second bracket segment (48) at the second mounting point.

2. The mounting arrangement as defined in claim 1, wherein one or a first of the one or more shoulder bolts (56) fastens the first bracket segment (44) to the casing (17) at the first mounting point, and one or a first of the one or more wave springs (54) is disposed between the first bracket segment (44) and the casing (17).

3. The mounting arrangement as defined in claim 2, wherein another of the one or more wave springs (54) is disposed between a head (56a) of said one of the one or more shoulder bolts (56) and the first bracket segment (44) at the first mounting point.

4. The mounting arrangement as defined in any preceding claim, wherein one of the one or more shoulder bolts (56) fastens the second bracket segment (48) to the accessory (22) at the second mounting point, and one of the one or more wave springs (54) is disposed between the second bracket segment (48) and the accessory.

5. The mounting arrangement as defined in claim 4, wherein another of the one or more wave springs (54) is disposed between a head (56a) of said one of the one or more shoulder bolts (56) and the accessory at the second mounting point.

6. The mounting arrangement as defined in claim 2, wherein a second of the one or more shoulder bolts (56) fastens the second bracket segment (48) to the accessory at the second mounting point, and a second of the one or more wave springs (54) is disposed between the second bracket segment (48) and the accessory.

7. The mounting arrangement as defined in claim 6, wherein a third of the one or more wave springs (54) is disposed between a head (56a) of the first of the one or more shoulder bolts (56) and the first bracket segment (44) at the first mounting point, and a fourth of the one or more wave springs (54) is disposed between a head (56a) of the second of the one or more shoulder bolts (56) and the accessory at the second mounting point.

8. The mounting arrangement as defined in any preceding claim, wherein the mounting arrangement has characteristics including: a stiffness of the one or more wave springs (54), a length of the one or more wave springs (54), a number of the one or more wave springs (54), and a degree of tightening of the one or more shoulder bolts (56), the characteristics of the mounting arrangement selected to dampen vibrations from the casing (17) to the accessory (22).

9. The mounting arrangement as defined in any preceding claim, wherein the one or more wave springs (54) are compressible along a bolt axis extending through the one or more shoulder bolts (56) in response to vibrations transmitted to the bracket (40) from one or more of the casing and the accessory.

10. An aircraft engine (10), comprising a mounting arrangement as defined in any preceding claim, wherein the casing is a turbine casing (17) of a turbine section (18) and the accessory is a cooling system (20) for the turbine section (18), the cooling system (20) including a cooling manifold (22a; 22b) disposed around the turbine casing and a cooling conduit (26) adapted to provide a cooling flow to the cooling manifold (22a; 22b).

11. A method for absorbing vibrations between an accessory (22) and a casing (17) of an aircraft engine (10), comprising:
coupling the accessory (22) to the casing (17) via brackets (40), at least one of the brackets (40) coupling the accessory (22) to the casing (17) at a first mounting point between a first bracket segment (44) and the casing (17) at and at a second mounting point between a second bracket segment (48) and the accessory (22); and
fastening the at least one of the brackets (40) to at least one of the casing (17) and the accessory (22) with a shoulder bolt (56) with one or more wave springs (54) disposed about a shaft of the shoulder bolt (56).

12. The method as described in claim 11, wherein coupling the accessory (22) to the casing (17) via the brackets (40) includes fastening the bracket (40) to the casing (22) with a first said shoulder bolt (56) and fastening the bracket (40) to the accessory with a second said shoulder bolt (56), with wave springs (54) disposed about a shaft of the first said shoulder bolt (56) and the second said shoulder bolt (56).
